# EUROPEAN PATENT APPLICATION

(11) **EP 2 471 740 A1**
(43) Date of publication of application: **04.07.2012**
(21) Application number: 09848724.2
(22) Date of filing: 27.08.2009
(51) Int. Cl.: C01B 33/107

(54) **METHOD FOR PURIFYING CHLOROSILANE**

(71) Applicant: Denki Kagaku Kogyo Kabushiki Kaisha, Tokyo 103-8338 (JP)
(72) Inventor: SUGIMURA Shin, Niigata 949-0393 (JP); MATSUOTO Kazumasa, Niigata 949-0393 (JP); KOBAYASHI Mineto, Niigata 949-0393 (JP); MATSUDA Hidehiro, Niigata 949-0393 (JP); MATSUZAWA Takashi, Niigata 949-0393 (JP)
(74) Representative: Hartz, Nikolai
(86) International application number: PCT/JP2009/064950
(87) International publication number: WO 2011/024276

(57) **Abstract**

A method for purifying a crude chlorosilane containing a boron compound, which is **characterized by** comprising a step wherein a chlorosilane containing a boron compound is brought into contact with an ion-exchange resin, and a step wherein the chlorosilane containing a boron compound is brought into contact with a silica adsorbent. It is preferable that the crude chlorosilane is brought into contact with the ion-exchange resin first, and then brought into contact with the silica adsorbent. In this connection, a silica gel is preferable as the silica absorbent, and a resin having a functional group represented by the following general formula: -CH₂NR₁R₂ (wherein R₁ and the like are as defined in the description) is preferable as the ion-exchange resin.

## Description

### TECHNICAL FIELD

The present invention relates to a method for purifying chlorosilanes.

### BACKGROUND ART

Chlorosilanes such as tetrachlorosilane (SiCl₄), trichlorosilane (SiHCl₃) and dichlorosilane (SiH₂Cl₂) have been used as raw materials for producing polycrystalline silicon for semiconductors, monosilane for solar cells and liquid crystals etc. Such chlorosilanes are produced by, for example, chlorinating a metallurgy-grade low-purity silicon called "metal silicon" by HCl or the like.

Chlorosilanes produced in this manner inevitably include impurity metallic elements or the like derived from metal silicon. As such, the obtained chlorosilanes are purified by distillation to remove as many inevitable impurities as possible to produce high-purity chlorosilanes, and then used as raw materials for polycrystalline silicon for semiconductors and monosilane etc.

Incidentally, while metal silicons comprise boron compounds in a proportion of several hundred ppbw to several hundred ppmw, boron is a p-type acceptor and would compromise the properties of polycrystalline silicon and monosilane etc. For this reason, while it is desirable to remove the boron compounds as much as possible from chlorosilanes comprising boron compounds (also referred to as crude chlorosilanes hereafter), the boiling point of boron compounds is relatively close to the boiling point of chlorosilanes, and as such, it is difficult to separate them by distillation, and the compounds tend to be a cause of contamination in chlorosilanes.

As such, various methods for removing boron compounds in crude chlorosilanes have been proposed. For example, a method in which a silane chloride polymer is added when distilling a crude chlorosilane (see Patent Document 1), a method in which a crude chlorosilane is passed through a silica fixed bed in a gas phase (see Patent Document 1), and a method in which a crude chlorosilane is passed through a nitrile-carrying zeolite (see Patent Document 3) have been given.

However, since methods of distilling a crude chlorosilane are separation methods in which the distillation operation utilizes differences in boiling points among substances, they are unsuitable for separating substances having close boiling points. For example, the boiling points of dichlorosilane and boron trichloride under atmospheric pressure are respectively approximately 8 °C and 12 °C, which are relatively close. For this reason, in order to remove boron trichloride from dichlorosilane, it needs to be passed through several distillation columns with a large number of trays, which requires a great amount of energy consumption. As disclosed in Patent Document 1, even when a silane chloride polymer is added when distilling a crude chlorosilane, the situation does not change.

Additionally, for methods of passing through a silica fixed bed, such as that described in Patent Document 2, the frequency of changing silica is high, which increases the running cost, and they were unsuitable for industrialization.
Moreover, for methods of passing a crude chlorosilane through a nitrile-carrying zeolite, such as that described in Patent Document 3, in addition to the costs for changing the adsorbent etc., there was the problem of potential contamination from the adsorbent.

### RELATED ART DOCUMENTS

### Patent Documents

Patent Document 1: JP-A 2007-1791
Patent Document 2 : JP-A S59-83925
Patent Document 3 : JP-A S61-197415

### SUMMARY OF INVENTION

As such, the object of the present invention is to provide a method for purifying a crude chlorosilane suitable for industrialization which is capable of removing a boron compound from the crude chlorosilane at a high removal rate.

The present inventors performed diligent investigations so as to solve the above technical problems. As a result thereof, they found that by contacting a crude chlorosilane comprising a boron compound with an ion-exchange resin and with a silica gel, the boron compound included therein as an impurity can be greatly removed, the frequency of changing the boron adsorbent decreases, and purification can be performed stably and efficiently, thereby arriving at the completion of the present invention.

In other words, in one aspect, the present invention relates to a method for purifying a crude chlorosilane comprising a boron compound, comprising the steps of:
contacting the crude chlorosilane with an ion-exchange resin; and
contacting the crude chlorosilane with a silica adsorbent.

In another aspect, the present invention relates to a method for purifying a crude chlorosilane, wherein the crude chlorosilane comprising a boron compound is contacted with an ion-exchange resin and then with a silica adsorbent. In one embodiment, in each contacting step, chlorosilane is contacted with an ion-exchange resin and/or silica gel with a moisture content kept at 2% or below. In one embodiment, the ion-exchange resin has a functional group represented by general formula (1):

-CH₂NR₁R₂ (1)

wherein R₁ and R₂ independently represent hydrogen or an alkyl group.
In another embodiment, the silica adsorbent is one in which at least 75% of 200 arbitrarily sampled particles are within a particle diameter range of 40 to 1000 µm and the 50% surface area average particle diameter is at most 300 µm. Additionally, it is a silica gel having a BET specific surface area of at least 450 m²/g. Moreover, the "particle diameter" here refers to the diameter of a circle equivalent to the projected area of the silica gel measured by microscope.

According to the method for purifying a chlorosilane according to one aspect of the invention, there is no need for cumbersome distillation operation, and boron compounds can be sufficiently removed by only the adsorption operation. Additionally, since sufficient breakthrough time of the adsorption layer can be secured and the frequency of changing the adsorbent can be decreased, purification can be carried out at a low cost, which is suitable for industrialization.

### BRIEF DESCRIPTION OF THE DRAWINGS

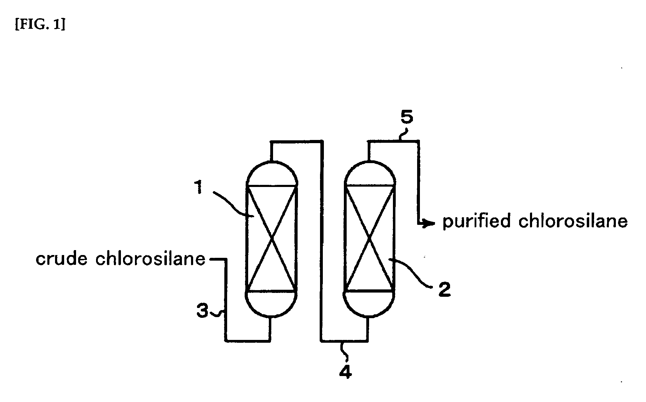

[Figure 1] is a flow diagram of an equipment for carrying out the method for purifying a chlorosilane according to one embodiment of the present invention.

### MODES FOR CARRYING OUT THE INVENTION

In the present invention, the crude chlorosilane to be purified is at least one chlorosilane selected from dichlorosilane (SiH₂Cl₂), trichlorosilane (SiHCl₃) and tetrachlorosilane (SiCl₄) etc. or a mixture of at least two chlorosilanes that inevitably includes boron or a boron compound. An example of such a crude chlorosilane is a crude chlorosilane obtained by chlorinating a metallurgy-grade silicon, and in such crude chlorosilanes, mixtures mainly comprising dichlorosilane, trichlorosilane and tetrachlorosilane inevitably include boron compounds.

In the present invention, while there is no particular limitation to the form of the boron compound inevitably included in the crude chlorosilane, crude chlorosilanes obtained by chlorinating metallurgy-grade silicon often include boron in the forms of various chlorides such as boron trichloride and diboron tetrachloride. While the amount of the boron compounds included varies, usually several ppbw to several ppmw of the boron compound remain in the above crude chlorosilane.

In one embodiment of the purification method of the present invention, the crude chlorosilane comprising the above boron compound obtained by chlorinating a metallurgy-grade silicon is contacted with two adsorbents, an ion-exchange resin and a silica gel, to reduce or remove the boron compound in the crude chlorosilane and to obtain a high-purity purified chlorosilane. According to the purification method, the boron concentration in a crude chlorosilane such as that described above with several ppbw to several ppmw of remnant boron compounds can be reduced to 1 ppbw or less.
Here, the crude chlorosilane may optionally be contacted with the ion-exchange resin or the silica gel first, and it does not matter whether it is contacted with the ion-exchange resin first and then the silica gel, or contacted with the silica gel first and then the ion-exchange resin. However, the present inventors, as a result of diligent investigation of combinations of various ion-exchange resins and silica gels of various properties, found that while the boron adsorption ability of ion-exchange resins is comparatively lower, the amount of boron adsorbed is high, and on the other hand, while the boron adsorption ability of silica gels is high, the amount of boron adsorbed is comparatively lower. As such, in order to maintain high-purity purification for a prolonged period, a crude chlorosilane is preferably contacted with an ion-exchange resin then a silica gel in that order.

While the ion-exchange resin to be used may have any substrate and functional group etc. as long as it can remove a boron compound from a crude chlorosilane by ion-exchange, as a result of diligent investigation by the present inventors, it was found that it may be favorable to use an anion-exchange resin formed by linking to a substrate or the like comprising a crosslinked polymer having a styrene unit, a functional group represented by general formula (1):

-CH₂NR₁R₂ (1)

wherein R₁ and R₂ represent hydrogen or an alkyl group (the number of carbon atoms is preferably 1 to 3, and the number of carbon atoms is particularly preferably 1). Additionally, it was found that even among anion-exchange resins, weakly basic anion-exchange resins having a BET specific surface area of 15 m²/g to 20 m²/g and a pore volume of 0.5 to 1.0 ml/g by the mercury intrusion technique and comprising a cross-linked copolymer having a styrene unit are particularly preferred. Examples of such weakly basic anion-exchange resins include "Amberlyst A-21" (registered trademark) manufactured by Rohm and Haas Company and "DIAION WA-30" (registered trademark) manufactured by Mitsubishi Chemical Corporation.

While the silica gel to be used may be anything that can remove boron compounds from a crude chlorosilane, as a result of diligent investigation by the present inventors, it was found that a silica gel in which at least 75% of the particles are within a particle diameter range of 40 to 1000 µm, the 50% surface area average particle diameter is at most 300 µm, and the BET specific surface area is at least 450 m²/g is preferred. When the particle diameter of the silica gel is too large, the contact area with the crude chlorosilane is small, reducing the adsorption efficiency. Conversely, when the particle diameter is small, the contact area with the crude chlorosilane is large, but the mesh of the filter for fixing the silica gel packed bed becomes small, and pressure loss when flowing the crude chlorosilane increases, resulting in a problem of a fine powder of the silica gel being incorporated inside the system. With an increase in the specific surface area, the solid-liquid interface becomes large, and boron removal efficiency increases. Silica gels are preferred because they are silicon compounds, it is easy to obtain those of a high purity, and they do not lower the quality of high-purity chlorosilanes.
Examples of such silica gels include "Wakogel C-100" (registered trademark) manufactured by Wako Pure Chemical Industries, Ltd., and "Grade 9385" and "Grade 7734" (both are trademarks) manufactured by Merck.

Additionally, for the above, the moisture contents of the ion-exchange resin and silica gel are preferably both adjusted to 2% or below. This is because when the moisture content is 2% or above, thermal degradation of the ion-exchange resin and blockage by precipitated silica in the system occur, and it is difficult to carry out stable operation for a prolonged period of time.

Moreover, while the method for contacting a crude chlorosilane with an adsorbent such as an ion-exchange resin or silica gel is not particularly limited, and may be, for example, a method in which the crude chlorosilane is passed through a packed column or container packed with the adsorbent or a method in which the adsorbent is put in a container storing the crude chlorosilane, when considering economic efficiency and operability, a method in which the crude chlorosilane is passed through a packed column packed with the adsorbent is preferred.

Figure 1 is a flow diagram demonstrating an example of an equipment for carrying out the method for purifying a chlorosilane according to one embodiment of the present invention, and in the drawing, 1 is a first packed column (inner diameter: 10.3 mm; packing height: 2400 mm), 2 is a second packed column (inner diameter: 10.3 mm; packing height: 1200 mm). First packed column 1 is packed with, for example, an adsorbent comprising a weakly basic anion-exchange resin comprising a cross-liked copolymer having a styrene unit and having a functional group of the above-mentioned formula (1), and a crude chlorosilane supply tube 3 is connected to the bottom of said packed column 1. On the other hand, second packed column 2 is packed with an adsorbent comprising a silica gel in which at least 75% of the particle are within a particle diameter range of 40 to 1000 µm, the 50% surface area average particle diameter is at most 300 µm, and the BET specific surface area is at least 450 m²/g, and a connecting tube 4 extending from the top of first packed column 1 is connected to the bottom of said packed column 2, and a purified chlorosilane extraction tube 5 runs from the top of said packed column 2.

For the equipment for purifying a chlorosilane, when a crude chlorosilane is continuously supplied to first packed column 1 through supply tube 3, the crude chlorosilane passes through the weakly basic anion-exchange resin layer packed in first packed column 1, during which a boron compound is adsorbed and removed by the ion-exchange resin, then flows from first packed column 1 via connecting tube 4 into second packed column 2, where the boron compound is further adsorbed and removed by the silica gel, and is continuously collected as a purified chlorosilane via extraction tube 5.
In the equipment for purifying a chlorosilane, since the crude chlorosilane first passes through the weakly basic anion-exchange resin layer, and then passes through the silica gel layer, the boron compound can be easily removed from the crude chlorosilane at a high removal rate.

While in the above example, two packed columns, one for an ion-exchange resin layer and the other as a silica gel layer, were used, one packed column may be partitioned, and constructed such that the lower part of the column is an ion-exchanged resin packed layer and the upper part of the column is a silica gel packed layer. Further, in order to also remove impurities other than the boron compound, other purification equipments may be provided before and after.

Furthermore, while in the above embodiment, a silica gel was used as one of the adsorbents, if it is possible to obtain one with a desired quality, an silica adsorbent other than a silica gel, such as a silica powder, fumed silica, amorphous silica or precipitated silica, as described in Patent Document 2, may be used. This is because as long as the adsorbent is a silicon compound, it will not lower the quality of high-purity chlorosilanes.

### Examples

Herebelow, the present invention shall be concretely explained with reference to examples, but the present invention shall not be limited by the examples.

### <Example 1>

A crude trichlorosilane having a boron concentration of 3000 ppbw was passed through packed layers of an ion-exchange resin ("Amberlyst A-21" (registered trademark) manufactured by Rohm and Haas Company) and of a silica gel ("Wakogel C-100" (registered trademark) manufactured by Wako Pure Chemical Industries, Ltd. (at least 75% of the particles are within a particle diameter range of 100 to 450 µm, the 50% surface area average particle diameter is 254 µm, the pore diameter is 70 Å and the specific surface area is 450 m²/g) (amount of packed ion-exchange resin = 72 g, amount of packed silica gel = 55 g) at a flow rate of 135 g/hr. Additionally, the ion-exchange resin used had a moisture content of 1.7% and the silica gel used had a moisture content of 1.5%. Moreover, the ion-exchange resin was packed upstream of the packed layers and the silica gel was packed downstream of the packed layers.

One hour after the trichlorosilane passed through the packed layers, samples of the trichlorosilane before and after the ion-exchange resin and silica gel packed layers were taken, and their boron concentrations were measured using an inductively coupled plasma atomic emission spectrometer (ICP-AES). Additionally, breakthrough time was measured (*1), using the time point at which the boron concentration in the trichlorosilane at the exit of the packed layers became 1 ppb or above as the breakthrough. The results are shown in Table 1.

**[Table 1]**

| | |
|---|---|
| Boron concentration before passing through ion-exchange resin + silica gel [ppbw] | 3000 |
| Boron concentration after passing through ion-exchange resin + silica gel [ppbw] | <1 |
| Breakthrough time^{*1} [day] | 90 |

As can be understood from Table 1, by contacting the crude trichlorosilane with a boron concentration of 3000 ppbw with the ion-exchange resin and silica gel, a high-purity chlorosilane with at most 1 ppbw was able to be obtained. Additionally, it was possible to secure 90 days until break-through.

### <Comparative Example 1>

A crude trichlorosilane with a boron concentration of 3000 ppbw was passed through a packed layer of an ion-exchange resin ("Amberlyst A-21" (registered trademark) manufactured by Rohm and Haas Company) (amount of packed ion-exchange resin = 108 g) at a flow rate of 135 g/hr. Additionally, the ion-exchange resin used had a moisture content of 1.7%.

One hour after the trichlorosilane passed through the packed layer, samples of the trichlorosilane before and after the ion-exchange resin packed layer were taken, and their boron concentrations were measured using an inductively coupled plasma atomic emission spectrometer (ICP-AES). Additionally, breakthrough time was measured (*2), using the time point at which the boron concentration in the trichlorosilane at the exit of the packed layer became higher than 2 ppb as the breakthrough. The results are shown in Table 2.

**[Table 2]**

| | |
|---|---|
| Boron concentration before passing through ion-exchange resin [ppbw] | 3000 |
| Boron concentration after passing through ion-exchange resin [ppbw] | 2 |
| Breakthrough^{*2} time [day] | 135 |

As can be understood from Table 2, by contacting the crude trichlorosilane with a boron concentration of 3000 ppbw with the ion-exchange resin, the boron concentration became 2 ppbw. It was found that compared to the case where it was contacted with the ion-exchange resin and silica gel, a breakthrough time of 1.5-fold was able to be secured, but the boron concentration was brought to 2 ppbw, indicating that the removal capability fell short of that of the ion-exchange resin and silica gel of Example 1.

### <Comparative Example 2>

A crude trichlorosilane with a boron concentration of 3000 ppbw was passed through a packed layer of a silica gel (amount of packed silica gel = 165 g) at a flow rate of 135 g/hr. The packed silica gel was the same as that in Example 1, and "Wakogel C-100" (registered trademark) manufactured by Wako Pure Chemical Industries, Ltd., in which at least 75% of the particles are within a particle diameter range of 100 to 450 µm, the 50% surface area average particle diameter is 254 µm, the pore diameter is 70 Å, the specific surface area is 450 m²/g and the moisture content is 1.5%, was used.

One hour after the trichlorosilane passed through the packed layer, samples of the trichlorosilane before and after the silica gel packed layer were taken, and their boron concentrations were measured using an inductively coupled plasma atomic emission spectrometer (ICP-AES). Additionally, breakthrough time was measured (*1), using the time point at which the boron concentration in the trichlorosilane at the exit of the packed layer became 1 ppb or above as the breakthrough. The results are shown in Table 3.

**[Table 3]**

| | |
|---|---|
| Boron concentration before passing through silica gel [ppbw] | 3000 |
| Boron concentration after passing through silica gel [ppbw] | <1 |
| Breakthrough time^{*1} [day] | 33 |

As can be understood from Table 3, by contacting the crude trichlorosilane with a boron concentration of 3000 ppbw with the silica gel, a high-purity chlorosilane with at most 1 ppbw was able to be obtained. However, it was found that compared to the case where it was contacted with the ion-exchange resin of Comparative Example 1, the breakthrough time was approximately 1/4.

### <Example 2>

2.5 g of ion-exchange resins were immersed in a crude tetrachlorosilane with a boron concentration of 790 ppmw. Two types, "Amberlyst A-21" (registered trademark) manufactured by Rohm and Haas Company and "Amberlite IRA-743" (registered trademark) manufactured by Rohm and Haas Company, were used.
"Amberlyst A-21" (registered trademark) is the same as that in Example 1, and "Amberlite IRA-743" (registered trademark) is an ion-exchange resin formed by linking to a substrate comprising a crosslinked polymer having styrene unit, a functional group represented by general formula (2):

-CH₂NCH₃CH₂[CH(OH)]₄CH₂OH (2)

12 hours after immersing the ion-exchange resins, samples of the crude tetrachlorosilane were taken, and their boron concentrations were measured using an inductively coupled plasma atomic emission spectrometer (ICP-AES), and the amounts of boron adsorption by the ion-exchange resins were measured. The results are shown in Table 4.

**[Table 4]**

| | Amount of Boron Adsorption [g-boron/kg-resin] |
|---|---|
| Amberlyst A-21 | 12 |
| Amberlite IRA-743 | 7 |

As can be understood from Table 4, it was found that the amount of boron adsorption was greater with an ion-exchange resin having a functional group represented by general formula (1):

-CH₂NR₁R₂ (1)

wherein R₁ and R₂ independently represent hydrogen or an alkyl group.

### <Example 3>

Crude trichlorosilanes with boron concentrations of 13 to 24 ppbw were passed though silica gel packed layers (amount of packed silica gel = approximately 30 g) at a flow rate of 135 g/hr. Three types of packed silica gels, with moisture contents of 1.4 to 1.7% and different particle diameters, were used.

One hour after the trichlorosilanes were passed, samples of the trichlorosilanes before and after the silica gel packed layers were taken, their boron concentrations were measured using an inductively coupled plasma atomic emission spectrometer (ICP-AES). The results are shown in Table 5.

**[Table 5]**

| Range of particle diameter [µm] (50% surface area average particle diameter [µm]) | Boron concentration before passing through silica gel [ppbw] | Boron concentration after passing through silica gel [ppbw] |
|---|---|---|
| 500 to 3200 (2760) | 13 | 6 |
| 63 to 230 (150) | 18 | <1 |
| 40 to 63 (61) | 24 | <1 |

As can be understood from Table 5, it was found that when contacting the trichlorosilanes with boron concentrations of 13 to 24 ppbw with the silica gels of different ranges of particle diameter, the effect of boron removal was improved by reducing the silica gel particle diameter.

### <Example 4>

A crude trichlorosilane with a boron concentration of 3000 ppbw was fed to ion-exchange resin packed layers of different moisture contents (amount of packed ion-exchange resin = 12 g: "Amberlyst A-21" (registered trademark) manufactured by Rohm and Haas Company), and heat generation upon initial contact of the ion-exchange resins with the chlorosilane was measured. Additionally, samples of the chlorosilane before and after passing through the ion-exchange resins were taken and their boron concentrations were measured using an inductively coupled plasma atomic emission spectrometer (ICP-AES), and the amounts of boron adsorption by the ion-exchange resins were measured. The results are shown in Table 6.

**[Table 6]**

| | | |
|---|---|---|
| Moisture content of resin [%] | 1.4 | 4.4 |
| Heat generation upon initial contact with chlorosilane ΔT [C°] | 40 | 100< |
| Amount of boron adsorption [g-boron/kg-resin] | 12 | 8 |

As can be understood from Table 6, it was found that a reduction in the moisture content of the resin had an effect of suppressing heat generation upon the initial contact of the chlorosilane with the ion-exchange resin. By managing the moisture content of the ion-exchange resin to at most 2%, it is kept at the upper temperature limit of the resin of 100 °C or below when the ion-exchange resin and chlorosilane are in initial contact, and thermal degradation of the functional group can be suppressed. By suppressing the heat generation upon initial contact of the ion-exchange resin and chlorosilane to the upper temperature limit of 100 °C or below, a maximum amount of boron adsorption per unit resin can be secured.

### <Example 5>

A crude trichlorosilane with a boron concentration of 3000 ppbw was fed to silica gel packed layers of different moisture contents (amount of packed silica gel = 19 g; "Wakogel C-100" (registered trademark) manufactured by Wako Pure Chemical Industries, Ltd.) Samples of the chlorosilane before and after passing through the silica gels were taken, and their boron concentrations were measured using an inductively coupled plasma atomic emission spectrometer (ICP-AES), and the amounts of boron adsorption by the silica gels were measured. The results are shown in Table 7.

**[Table 7]**

| | | |
|---|---|---|
| content of silica gel [%] | 1.5 | 5.4 |
| Moisture Amount of boron adsorption [g-boron/kg-silica gel] | 2 | 2 |

As can be understood from Table 7, it was found that the moisture content did not affect the amount of boron adsorption by the silica gel. However, when feeding the chlorosilane to the silica gel packed layer with a moisture content of 5.4%, silica precipitated in the silica gel packed layer and an increase in differential pressure was observed. As such, by managing the moisture content of the silica gel to 2% or below, silica generated from water and chlorosilane can be suppressed and stable operation can be secured.

### <Example 6>

A crude trichlorosilane with a boron concentration of 3000 ppbw was passed through an ion-exchange resin packed layer (amount of packed ion-exchange resin = 12 g; "Amberlyst A-21" (registered trademark) manufactured by Rohm and Haas Company) and a silica gel packed layer (amount of packed silica gel = 18 g; "Wakogel C-100" (registered trademark) manufactured by Wako Pure Chemical Industries, Ltd.) respectively at a flow rate of 3.24 kg/day. The moisture content of the packed ion-exchange resin used was 1.7% and the moisture content of the silica gel used was 1.5%.

Samples of the chlorosilane were taken at the exit of each packed layer, and breakthrough times were measured using an inductively coupled plasma atomic emission spectrometer (ICP-AES) which measures their boron concentrations. The results are shown in Table 8.

**[Table 8]**

| | Breakthrough time [day] |
|---|---|
| Ion-exchange resin | 15 |
| Silica gel | 4 |

As can be understood from Table 8, it was found that the ion-exchange resin adsorbed boron over a period that is almost four times as long as that of the silica gel. Description of Reference Numbers

- 1: first packed column
- 2: second packed column
- 3: supply tube
- 4: connecting tube
- 5: extraction tube

## Claims

1. A method for purifying a crude chlorosilane comprising a boron compound, comprising the steps of:
- contacting the crude chlorosilane with an ion-exchange resin; and
- contacting the crude chlorosilane with a silica adsorbent.

2. The purification method according to claim 1, comprising the step of:
- contacting the crude chlorosilane comprising the boron compound with the ion-exchange resin and then contacting it with the silica adsorbent.

3. The purification method according to claim 1 or 2, comprising the step of:
- contacting the chlorosilane with the ion-exchange resin and silica adsorbent with a moisture content managed to 2% or below.

4. The purification method according to any one of claims 1 to 3, wherein the ion-exchange resin has a functional group represented by general formula (1):
-CH₂NR₁R₂ (1)
wherein R₁ and R₂ independently represent hydrogen or an alkyl group.

5. The purification method according to any one of claims 1 to 4, wherein the silica adsorbent is a silica gel having at least 75% of the particles within a particle diameter range of 40 to 1000 µm, a 50% surface area average particle diameter of at most 300 µm, and a specific surface area of at least 450 m²/g.
